# EUROPEAN PATENT APPLICATION

(11) **EP 4 651 356 A1**
(43) Date of publication of application: **19.11.2025**
(21) Application number: 25174817.4
(22) Date of filing: 07.05.2025
(51) Int. Cl.: H02M 3/158, H02M 1/08

(54) **POWER CONVERTER**

(30) Priority: 14.05.2024 GB 202406811
(71) Applicant: Fortescue Zero Limited, Kidlington Oxfordshire OX5 1GB (GB)
(72) Inventor: DOWSON, Shaun, Kidlington, OX5 1GB (GB); ALBAROSA, Alexander, London, SE3 0TY (GB); MASCARENHAS, Manuel, Kidlington, OX5 1GB (GB)
(74) Representative: Boult Wade Tennant LLP

(57) **Abstract**

There is described apparatus comprising: a power converter unit having a plurality of power stages, each power stage comprising one or more MOSFET modules, one or more gate driving units arranged to drive MOSFETs in the MOSFET modules to effect electrical power conversion by MOSFET switching; a control unit arranged to receive one or more control signals dictating properties of the required electrical power conversion and receive measured physical parameters from the power stages, and to generate gate driving signals for use by the gate driving units in controlling the MOSFETs, each power stage being coupled to the control unit via a single respective uplink plastic optical fibre and a single respective downlink plastic optical fibre, each power stage comprising an uplink optical interface and a serialiser arranged to serialise the measured physical parameters for transmission to the control unit on the uplink plastic optical fibre, the control unit comprising, for each power stage, a downlink optical interface and a serialiser arranged to serialise the gate driving signals for that power stage for transmission on the downlink optical fibre via the downlink optical interface. A vehicle and method are also described.

## Description

The present disclosure relates to a power converter, and in particular to a power converter having a plurality of power stages.

### Introduction

Electrical power systems in which the electrical power source is comprised of one or more battery modules are commonly used in providing motive power in vehicles, boats, small aircraft and other modes of transportation and in industrial applications such as mining vehicles and equipment. The flexibility of such systems also makes them attractive as domestic and industrial power banks. In all of these systems it is often desirable to convert between the native DC voltage output from the one or more battery modules to a different DC voltage as required by a motive unit in the vehicle or other load unit in domestic and industrial systems.

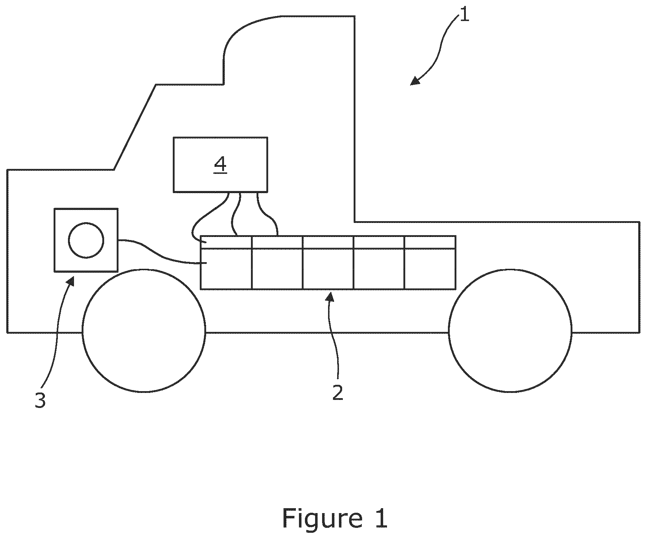

Figure 1 is a schematic illustration of a vehicle 1 such as an automobile, truck, or truck tractor unit in which motive power is provided by a battery 2 comprising a plurality of battery modules. Power from the battery is supplied to a motor 3 for providing drive to the wheels of the vehicle through an electrical power chain. Commonly the motor is an AC motor and in such a case an inverter of the power chain converts the battery DC power to AC power for driving the AC motor. A control unit 4 may control the motor 3, such as based on the requirements of the driver, and also controls the power supplied by the battery.

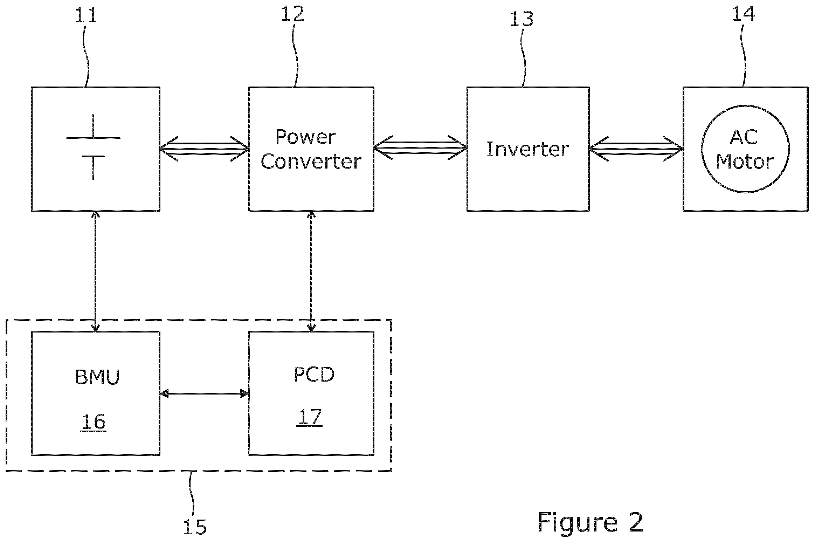

Figure 2 is a block diagram showing in more detail some interactions between power system components of a suitable electrical power chain which might be used in the vehicle of Figure 1 or other application areas. Battery 11 provides DC power to power converter 12. The power converter 12 provides DC-DC conversion from a first voltage of the battery to a second voltage for use by the inverter. In vehicles, the first voltage is commonly higher than the second voltage, and the voltage conversion is carried out by carefully controlled switching operations of power semiconductors such as MOSFETs. Inverter 13 converts the DC second voltage output provided from the power converter to an AC voltage for supply to the motor 14 for motive driving of the vehicle. Frequently, the inverter and power converter may be arranged to operate in both directions to either use battery power to provide motive force, or use motion of the vehicle to charge the battery.

A battery management unit (BMU) monitors the battery modules and controls power delivery to the electrical power chain so that battery lifetime, power delivery and charging are optimised. Power converter driver (PCD) unit 17 controls the power converter such that the power is delivered from the battery to the motor in the manner desired, for example as requested by a driver or the control unit. The battery management unit 16 and the power converter driver 17 may be arranged together such as at a combined controller 15 or may be separately located. For example, the power converter driver may be located at the power converter and the battery management unit may be located with the battery module.

It would be desirable to address problems and limitations of the prior art.

### Summary of the Invention

Power converters may be limited in their power handling capability. To increase power handling capability multiple power stages may be arranged in parallel in a power converter. In such a parallel arrangement it is important that each of the power stages operates in a manner which is carefully controlled temporally with respect to the other power stages. For example, if the parallel power stages use pulse-width modulation for the switching it is desirable that the switching has a temporal correlation with each other power stages to avoid switching cycles being slightly out of the desired phase relationships. This provides demands on connections and communication channels to each power stage, at least in terms of physically managing multiple cables, avoiding interference between such cables which will likely be arranged close to each other, and also avoiding weight and complexity challenges due to electrical shielding required to avoid such interference.

The present invention provides apparatus comprising: a power converter unit comprising a plurality of electrically parallel power stages, each power stage arranged to convert electrical power in either direction between a first DC voltage and a second DC voltage. The power converter is divided into multiple power stages to increase the power handling capability. MOSFETs, other power converter switching components or transistors may have a limited power handling capability so by splitting the power conversion across multiple parallel stages the power handling is increased.

Each power stage comprises one or more MOSFET modules and one or more gate driving units arranged to deliver gate driving signals to the MOSFETs in the MOSFET module(s) to effect the electrical power conversion by MOSFET switching. Each power stage further comprises a plurality sensors arranged to measure physical parameters of the power stage. In embodiments, the MOSFETs may alternatively be other power switching components or other types of transistors, and the gate driving units may respectively be switching control units or base control/driving units.

The apparatus further comprises a control unit spaced from the power converter unit. The control unit is arranged to receive one or more control signals dictating properties of the required electrical power conversion, for example first and second DC voltages, and the measured physical parameters from the power stages, and to generate gate driving signals for use by the gate driving units in controlling the MOSFETs.

Each power stage is coupled to the control unit via a single uplink plastic optical fibre arranged to carry the measured physical parameters to the control unit for use in generating the gate driving signals, and a single downlink plastic optical fibre arranged to carry the gate driving signals from the control unit to the power stage for use in delivering gate driving signals to the MOSFET modules.

Each power stage further comprises an uplink optical interface and a serialiser arranged to serialise the measured physical parameters for transmission to the control unit on the uplink plastic optical fibre via the uplink optical interface. The control unit comprises, for each power stage, a downlink optical interface and a serialiser arranged to serialise the gate driving signals for that power stage for transmission on the downlink optical fibre via the downlink optical interface. The use of only a single uplink optical fibre and only a single downlink optical fibre reduces the number of connections to each power stage. This is possible by the use of the serialiser and deserialiser to convert multiple parallel signals to single upstream and single downstream serial data streams for each power stage. Plastic optical fibre are used for increased robustness over conventional glass or silica fibres.

Each power stage may further comprise a downlink optical interface and a deserialiser, the deserialiser arranged to deserialise the gate driving signals received from the downlink optical interface and supply the gate driving signals to the gate driving units to control the MOSFETs. The control unit may further comprise an uplink optical interface and a deserialiser, the deserialiser arranged to deserialise the measured physical parameters received from the uplink optical interface for use in generating the gate driving signals.

Each power stage preferably comprises a separate serialiser IC to the other power stages, and each power stage preferably comprises a separate deserialiser IC to the other power stages. The serialiser IC and deserialiser IC for a given power stage may be provided as one combined serialiser/deserialiser IC.

The serialisers may be configured to use 8b/10b encoding or similar encoding, for example, in which a number of bits of data are encoded as symbols.

The gate driving signals may comprise PWM control signals.

The measured physical parameters may comprise one or more of: voltage, current and temperature, measured at the respective power stage.

Each power stage preferably has a single gate driving unit configured to receive the gate driving signals and deliver the gate driving signals to two MOSFET modules, wherein a first of the two MOSFET modules arranged on a first side of a power converter bridge and second of the two MOSFET modules arranged on a second side of a power converter bridge.

Each gate driving unit may comprise a first gate driving circuit and a second gate driving circuit. The first gate driving circuit may be arranged to send gate driving signals to the first MOSFET module and the second gate driving circuit may be arranged to send gate driving signals to the second MOSFET module.

For each power stage, the serialiser of the control unit may be configured to serialise the gate driving signals for one or more MOSFETs in the first MOSFET module with the gate driving signals for one or more MOSFETs in the second MOSFET module and the downlink optical interface is configured to transmit the serialised gate driving signals on the downlink plastic optical fibre to the gate driving unit of the respective power stage.

The apparatus may further comprise, at each gate driving unit, a digital isolator arranged to provide isolation between the gate driving signals for the first MOSFET module and the second MOSFET module.

The MOSFETs may be arranged in a buck-boost configuration. Four MOSFETs may be provided to form the buck-boost configuration for each power stage. Of the four MOSFETs, two may be provided in the first MOSFET module and two may be provided in the second MOSFET module. The first MOSFET module may be at an input or battery side of the power converter unit and the second MOSFET module may be at an output or inverter/motor side of the power converter unit. A reactance component may be provided between the two MOSFET modules.

The uplink plastic optical fibre and the downlink plastic optical fibre may be configured as a duplex optical link such that the control unit communicates with the power stages by respective duplex optical links to each power stage. Preferably only one duplex optical link may be provided to each power stage.

The electrically parallel power stages may be configured for outputting a voltage in the range 0 to 2000V or 5000V such as between 0 and 2500V or in the range 100 to 2000V or 5000V such as between 1500 and 2500V. The apparatus may be configured such that the combined converted power output by the plurality of power stages is in the range of 100s of kW to 10 MW. Alternatively, the battery voltage may be of the order of 100s of volts and the power stages reduce the voltage to tens of volts.

The plastic optical fibres to each power stage may be at least 0.5 or 1 metre long and up to 5 or 10 metres long, or longer.

The present invention provides a vehicle comprising the apparatus set out herein, a battery formed of one or more battery modules and an electrical motive drive unit or motor. The apparatus provides power conversion in either direction between the one or more battery modules and the electrical motive drive unit. The vehicle may be a wheeled vehicle.

The present invention further provides a method of controlling a power converter comprising a plurality of power stages, the method comprising: receiving, at a control unit, one or more control signals dictating properties of required electrical power conversion (such as the first and second DC voltages) and measured physical parameters from the plurality of power stages; based on the received one or more control signals and measured physical parameters, generating gate driving signals for use by gate driving units in controlling MOSFETs of the one or more power stages; serialising the gate driving signals for a respective power stage; transmitting, via a downlink optical interface, the serialised gate driving signals on a downlink optical fibre to an optical interface at the respective power stage; receiving the serialised gate driving signals a the power stage and deserialising the gate driving signals at a deserialiser for the respective power stage; and delivering the gate driving signals to MOSFETs of one or more MOSFET modules to effect the electrical power conversion by MOSFET switching.

The method may further comprise: measuring one or more physical parameters at the respective power stage; serialising the measured one or more physical parameters and transmitting them, via an uplink plastic optical fibre, to the control unit; and deserialising the measured one or more physical parameters at the control unit.

The present disclosure may further provide an apparatus comprising: a power converter unit comprising a plurality of electrically parallel power stages, each power stage arranged to convert electrical power between a first DC voltage and a second DC voltage, each power stage comprising one or more MOSFET modules, one or more gate driving units arranged to deliver gate driving signals to the MOSFETs in the MOSFET module(s) to effect the electrical power conversion by MOSFET switching; a control unit spaced from the power converter unit, the control unit arranged to receive one or more control signals dictating properties of the required electrical power conversion, and to generate gate driving signals for use by the gate driving units in controlling the MOSFETs,
each power stage being coupled to the control unit via a single downlink plastic optical fibre arranged to carry the gate driving signals from the control unit to the power stage for use in delivering gate driving signals to the MOSFET modules,
the control unit comprising, for each power stage, a downlink optical interface and a serialiser arranged to serialise the gate driving signals for that power stage for transmission on the downlink optical fibre via the downlink optical interface.

The apparatus may further comprise: at each of the power stages, a plurality sensors arranged to measure physical parameters of the power stages, and a single uplink plastic optical fibre arranged to carry the measured physical parameters to the control unit for use in generating the gate driving signals, and each power stage may comprise an uplink optical interface and a serialiser arranged to serialise the measured physical parameters for transmission to the control unit on the uplink plastic optical fibre via the uplink optical interface.

### Brief summary of the drawings

Embodiments of the invention will now be described, by way of example only, with reference to the accompanying drawings, of which:
Figure 1 is a schematic illustration of vehicle with power provided by batteries;
Figure 2 is a block diagram showing in more detail the interactions between power system components of an electrical power chain of a battery electric vehicle;
Figure 3 is a block diagram of a power converter with multiple stages arranged in parallel;
Figure 4 is a detailed schematic diagram of connections between a controller unit and multiple power stages of a power converter;
Figure 5 is a diagram showing circuitry for a power converter based on a buck-boost converter;
Figure 6 is a schematic block showing detail of how control and measurement signals are transmitted between a control unit and a gate driving unit; and
Figure 7 is a table indicating the control signals and measurement signals sent and received by a serialiser/deserialiser at the control unit.

### Detailed description of embodiments

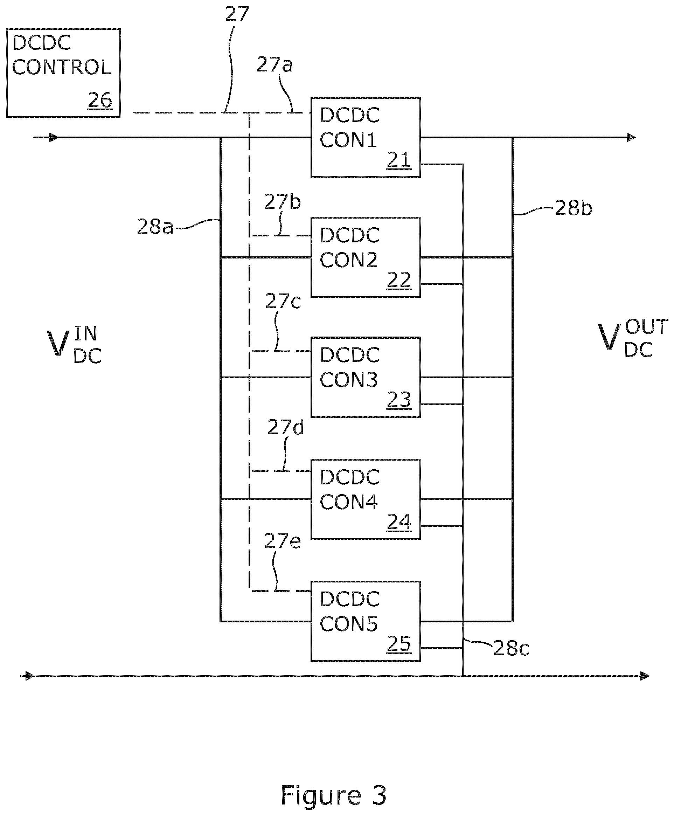

Figure 3 is a schematic high level diagram of a power converter comprising multiple power stages arranged in parallel. The figure shows five power stages labelled as 21-25. Other numbers of power stages may be provided, for example, more than five or less than five, but preferably there at least two power stages. The power stages are arranged in parallel to receive an input DC voltage, V_{DCIN}, such as received from a battery comprising one or more battery modules, and to provide an output DC voltage, V_{DCOUT} such as to an inverter for powering an AC motor. Each of the power stages 21-25 of the power converter are controlled by DC-DC controller 26. Communications between the DC-DC controller 26 and the power stages 21-25 are made along optical fibres 27. Separate optical fibres or optical fibre cables are used for communicating with each power stage. For example, communications from DC-DC controller 26 to power stage 21 are made along optical fibre 27a, and communications from DC-DC controller 26 to power stage 22 are made along optical fibre 27b, etc. Hence, the optical fibres 27a-27e or optical fibre cables may be consider to be arranged in a star configuration or one-to-many configuration. The DC-DC controller may be arranged remotely or spaced apart from the power stages 21-25. For example, DC-DC controller may be arranged near to a vehicle main controller. Figure 3 shows that the optical fibres or cables may be arranged close to each other as they are routed from the DC-DC controller 26 to the power stages. Unlike electrical cables, optical fibres are much less prone to interference when placed proximally close together and relatively high speed (for example, MHz) signals are transmitted along them.

It is particularly preferred that the optical fibres are plastic optical fibres because of the extra ruggedness they provide over conventional glass optical fibres. Furthermore, the signals are being sent relatively short distances, such as 1-5 metres or 1-10 metres, and because the signals are MHz, the higher dispersion and signal attenuation of plastic optical fibres is not a problem.

Figure 3 shows optical fibres 27a-27e or optical fibre cables from the DC-DC controller 26 connecting to the power stages 21-25. The optical fibres may be duplex optical fibres or optical fibre cables for sending signals uplink and downlink. For example, the downlink signals may be used to control aspects of the power stage such a switching of the converter and/or setting the power supplied, whereas uplink signals may be measured parameters relating to the power stage such as voltage, current, temperature etc. The duplex is preferably provided by means of a duplex optical fibre namely a pair of fibres, one for the uplink and one for the downlink. The two fibres may be provided in a single cable. Other duplex arrangements are possible, such as using two communications on a single optical fibre. However, the use of an optical fibre for the uplink and another for the downlink is preferred for plastic optical fibres because of scattering limitations of the material.

In embodiments the optical transceiver may be from the Broadcom ABFR range of transceivers, the MOSFETs may be SiC modules available from various manufacturers, and the optical fibre may be any generic plastic optical fibre that is compatible with the transceivers.

Also shown in figure 3 are the electrical connections to connect the power stages in parallel. Each power stage is connected in parallel by connections 28a to the input voltage line or rail and to the output voltage line or rail 28b. Each of the power stages is also connected to the ground rail or line by the connection 28c.

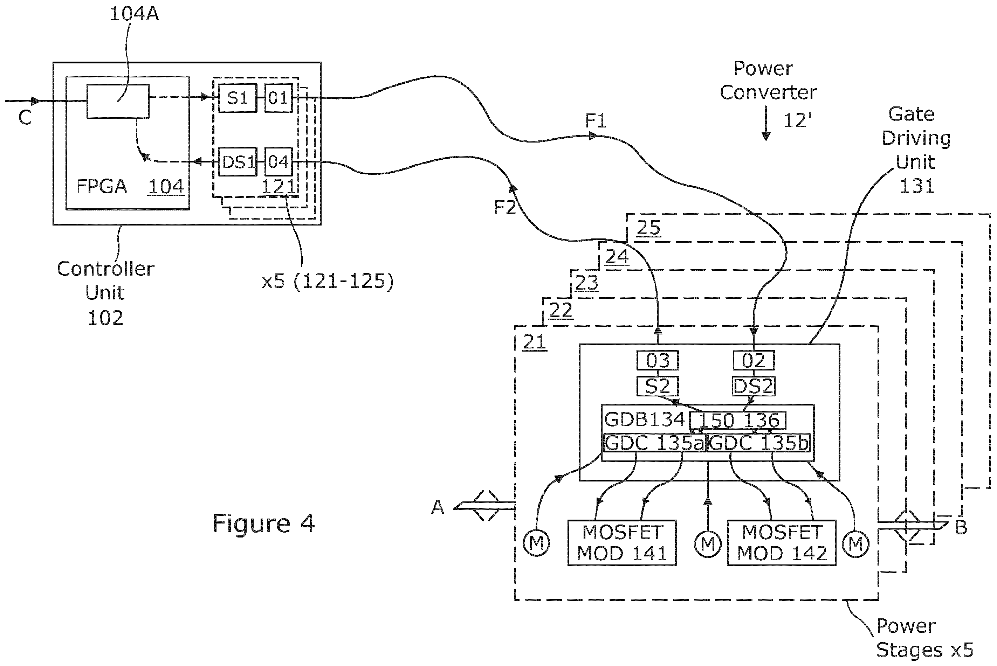

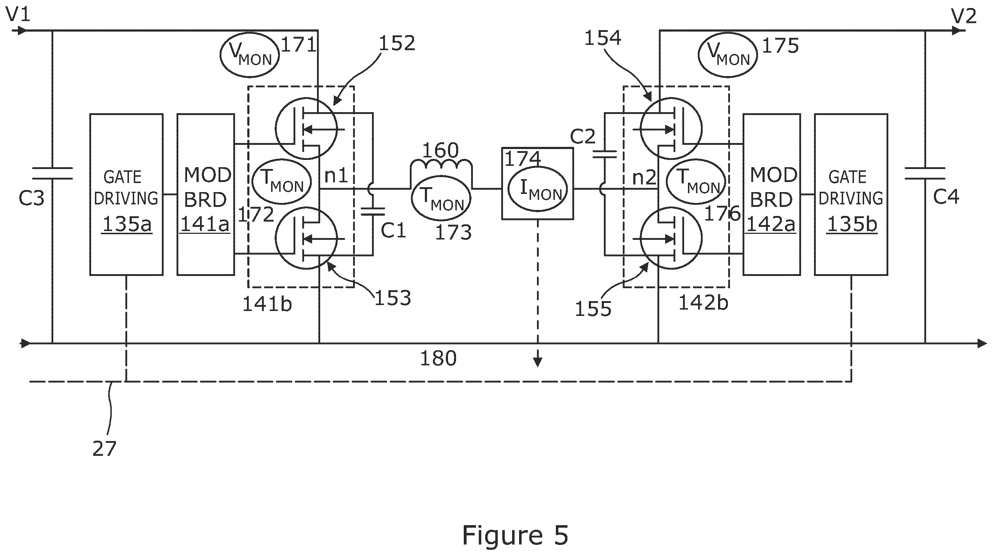

Figure 4 is a detailed schematic diagram of connections between a controller unit 102 and a number of power stages similarly to those of figure 3 but shown in greater detail. Figure 5 is a diagram showing example circuitry for part of a power stage, namely using a buck-boost converter. Figure 4 relates to the communications between the controller unit or control unit and the power stage which may be used to control MOSFETs within the power stage or other power converter components or switching components therein.

Referring in detail to figure 4, power converter 12' comprises five power stages 21, 22, 23, 24, 25 similar to those of figure 3 are shown. As previously indicated the number of power stages is preferably two or more. The embodiment of figure 4 shows five power stages similarly to figure 3, however other numbers of power stages may be provided. Controller unit 102 may have similarities to, or comprise, DC-DC controller 26 of figure 3.

Controller unit 102 of figure 3 comprises a processor such as an FPGA which is arranged to receive control signals, C. These control signals, C, may be received from a vehicle main controller which receives inputs from a driver such as to increase speed or decrease speed etc. Such vehicle main controllers may include simulations or predictions regarding the required voltages to provide a required amount of torque or motive power to wheels. Similar arrangements and considerations would apply if the present invention is implemented as a power converter for a domestic or industrial application but with power demands derived from requirements of the house or industry.

FPGA 104 of controller 102 is programmed with a control algorithm 104a for controlling the plurality of power stages. The control algorithm uses signals from sensors in the power stages and the control signal C to set the power converter components in the power stages to the correct operating point(s) to achieve the desired power output in an efficient manner. The FPGA outputs relatively fast switching signals for controlling the power conversion. For example, by using pulse-width modulation or by setting control signals for PWM. Controller unit 102 further comprises communications circuit boards 121-125, units or ICs. One communications board may be provided for each power stage. Each communication board includes a serialiser, S1, and a deserialiser, DS1, along with two optical transceivers, O1 and O4. The optical transceivers, O1 and O4, are respectively connected to the duplex plastic optical fibre link formed of fibre F1 for the downlink and fibre F2 for the uplink. As we will describe further each power stage has multiple power converter components that require controlling. Hence, there is a need to transmit multiple control signals to each power stage simultaneously. The present invention provides the sending of multiple control signals by using serialisation and optical transceiver, O1, to send the signals along the optical fibre. The signals are then received by an optical transceiver at the other end of the optical fibre and deserialised. In one embodiment, the power stage comprises a buck-boost converter which includes four MOSFETs with each requiring a control signal at the gate of the MOSFET. Hence, it is required to serialise and send control signals for the gates along the downlink fibre F1. Similarly, measurement signals are generated from the power stages 21-25. The multiple measurement signals are transmitted from the power stages and received via the uplink fibre at the optical transceiver, O4, which are deserialised at deserialiser DS1 of the control unit.

Although we have described the serialiser, deserialiser and optical transceivers as being provided on a communication board or IC, other arrangements are possible. For example, all of the serialisers, deserialisers and optical transceivers for transmitting to and receiving from all of the power stages may be provided on a single board and this may be the same board as the FPGA or processor. However, it is advantageous to use separate communications boards for each power stage as this means the power systems may be easily scaled if more or less power stages are required. Additionally, interference between signals may be reduced if the serialiser, deserialiser and optical transceivers for each power stage are provided on separate boards, as in the arrangement shown in figure 4.

We now describe the power stages 21-25 in figure 4. Each power stage receives a first voltage and outputs a second voltage. These are schematically indicated by "A" and "B" respectively. For example, the first voltage may be 1500V DC and the second voltage may be 2100V DC. The power stages are connected in parallel so all are connected to the same voltages. In general, one side of the power stage may be considered to be the input side to which power is supplied, such as from battery, and the other side may be considered to be the output side which power is output from, such as to a load or inverter for an AC motor. However, the power converter described herein is considered to be bi-directional, as indicated by the two-way arrows adjacent to "A" and "B". Power may also be transmitted in the reverse direction. For example, power may be regenerated from motion of the vehicle and returned to recharge the battery.

Each power stage comprises a gate driving unit 131. The gate driving unit 131 comprises optical transceivers O2 and O3 respectively for receiving signals from downlink optical fibre F1 and for sending signals along the uplink optical fibre F2. The gate driving unit further comprises a deserialiser, DS2, serialiser, S2, and one or more gate driving circuits. In figure 4 two gate driving circuits 135a and 135b are shown on gate driving board 134. Gate driving board 134 also includes one or more digital isolators 136. The power stage further comprises power converter components. As shown in figure 4 the power converter components are MOSFETS which are provided as two MOSFET modules 141 and 142. MOSFET module 141 may be used at the lower voltage side (or battery side) of the power converter and MOSFET module 142 may be used at the higher voltage side (or inverter for AC motor side) of the power converter. The power converter may configured as a bridge circuit and/or as a buck-boost converter as previously discussed. Hence, MOSFET modules may be configured on opposing sides of the bridge or converter. The signals received along the downlink optical fibre F1 are received at transceiver O2 where they are converted from the optical domain to the electrical domain. The electrical signals are then sent to deserialiser, DS1, to deserialise the signals into parallel signal streams. Preferably, the signals are passed through the digital isolators 136 before being sent to the gate driving circuits 135a, 135b. The gate driving circuits send the signals to the MOSFET modules to control the gates in the modules. By having separate gate driving circuits for the high side and the low side MOSFET modules, the two gate driving circuits can be galvanically isolated from one another. Galvanic isolation between the two circuits is further improved by sending the digital signals through digital isolators. For a four MOSFET buck-boost type converter two signals may be sent to the MOSFET module 141 to control the gates of the two transistors at one side of the bridge or converter, such as the lower voltage side. Two other signals are sent to the MOSFET module 142 to control gates to the other two transistors at the other side of the bridge or converter, such as the higher voltage side. Although we have described having four MOSFETS split into pairs with two each per MOSFET modules, this is a preferred arrangement and in other embodiments only one MOSFET may be provided per module or up to four MOSFETS may be provided per module such that four or only one MOSFET module is required. However, it is preferable to have the MOSFETs on opposite sides of the bridge on different modules to minimise noise and interference.

Also included in power stage 121 are sensors, M, for measuring physical parameters at the respective power stage. The physical parameters may include voltage, current and temperature. Measurement signals received from the sensors, M, are sent to the gate driving board 134. Figure 4 shows three sensors, M. The gate driving board sends the measurement signals as parallel signals to the serialiser, S2, which serialises them and passes them to the optical transceiver O3 for transmission in the optical domain along uplink fibre F2 to the controller unit.

Although we have described two gate driving circuits 135a, 135b, communicating with the controller unit via duplex fibre link and controlling the two MOSFET modules for each power stage, the power stage may alternatively be arranged with gate driving circuits on separate gate driving boards. A first gate driving circuit may be provided on a first gate driving board which controls first MOSFET module 141 on one side of the bridge or converter and a second gate driving circuit may be provided on a second gate driving board which controls second MOSFET module 142 on the other side of the bridge or converter. Correspondingly, the first gate driving circuit on first gate driving board also receives measurements from the sensors on the one side of the bridge or converter and second gate driving circuit on second gate driving board receives measurements from the sensors on the other side of the bridge. With such an arrangement and the duplex fibre linked discussed an intermediate communications unit is need to split the communication sent/received to/from the fibre link to the respective first and second gate driving circuits. This may include digital isolators. This two board arrangement is less preferred because of the extra complexity in directing signals. Also for any measurement signals that are received that are not related to the two MOSFET modules, the measurement signals will have to be transmitted by one of the gate driving boards.

Figure 4 shows five power stages and each power stage is controlled by controller unit with a duplex fibre link. The five (or other number of) power stages are substantially the same as each other.

We now describe the circuit diagram of figure 5 which shows the gate driver circuits 135a, 135b, MOSFET modules 141 and 142, and the circuit of the buck-boost converter. As mentioned, the buck-boost converter may be a four MOSFET type buck-boost converter. Instead of the MOSFETs, other power converter components or switching units could be used such as other types of transistors. However, for the applications described herein MOSFETS are preferred, and in particular SiC MOSFETs because they are faster switching than Si MOSFETS which results in a higher power transfer efficiency. In figure 5 the four MOSFETs are identified by reference numbers 152, 153, 154 and 155. The other main component of a buck-boost converter is a reactance component which in figure 5 is a inductor 160. The two gate driving circuits 135a, 135b, are shown in the figure.

The gate driving circuit 135a sends signals to the first MOSFET module 141 which comprises a MOSFET module circuit board 141a and the pair of MOSFETs 152 and 153 which are together indicated by reference numeral 141b. Gate driving circuit 135b sends signals to the second MOSFET module 142 which comprises MOSFET module circuit board 142a and the pair of MOSFETs 154 and 155 which are together indicated by reference numeral 142b. The MOSFETs in each pair of MOSFETs are connected in series. Inductor 160 is connected at one side to a first node n1 between the two MOSFETs 152 and 153 of the first MOSFET module. The other side of the inductor is connected to a second node n2 between the two MOSFETs 154 and 155 of the second MOSEFT module.

The buck-boost converter arrangement is configured to convert from a first voltage V1, which is shown on the left hand side of figure 5 as the voltage on the top left hand power rail/line, to a second voltage V2, which is shown on the right hand side of figure 5 as the voltage on the top right hand power rail/line. MOSFET 152 is configured with its source terminal connected to the V1 voltage and its drain terminal connected to node n1 which is in turn connected to the source of MOSFET 153. The drain of MOSFET 153 is connected to ground rail/line 180. As previously described, the gates of MOSFETs 152 and 153 are controlled by signals from gate driving circuit 135a, which are supplied via the MOSFET module circuit board 141a. On the left hand side of the circuit diagram is capacitor C3 which is connected between the V1 voltage rail and ground rail 180. The capacitor C3 is an output smoothing capacitor to smooth ripples in voltage on the V1 rail, particularly when power is returned to the V1 rail. Additionally, a capacitor C1 is connected from the source terminal of MOSFET 152 to the drain terminal of MOSFET 153. Capacitor C1 is a snubber capacitor and is for suppressing voltage spikes and ringing which may arise when the MOSFETS are turned on and off. Also on the V1 side of the circuit of figure 5 are sensors 171 and 172. Sensor 171 is a voltage monitor arranged for monitoring the voltage on the voltage rail V1. Sensor 172 is a temperature monitor provided on the MOSFET module board 141 to monitor temperature to avoid overheating of the MOSFETs which are capable of carrying high currents.

A sensor 173 may be arranged close to inductor 160 which is connected between nodes n1 and n2. The sensor 173 may be a temperature sensor such as a thermistor, and is arranged for monitoring the temperature at the inductor.

The right hand side of figure 5 is a partial mirror of the left hand side. As discussed previously, MOSFET module 142 comprises MOSFETs 154 and 155. MOSFET 154 is configured with its source terminal connected to the V2 voltage and its drain terminal is connected to node n2 which is in turn connected to the source of MOSFET 155. The drain terminal of MOSFET 155 is connected to ground rail/line 180. As previously described, the gates of MOSFETs 154 and 155 are controlled by signals from gate driving circuit 135b which are supplied via the MOSFET module circuit board 142a. At the far right of the circuit diagram is capacitor C4 which is connected between the V2 voltage rail and ground rail 180. The capacitor C4 is an output smoothing capacitor to smooth ripples in voltage on the V2 rail, as power is supplied to the V2 rail. Additionally, a capacitor C2 is connected from the source terminal of MOSFET 154 to the drain terminal of MOSFET 155. Capacitor C2 is also a snubber capacitor and is for suppressing voltage spikes and ringing which may arise when the MOSFETS are turned on and off. Similar to the V1 side of the circuit, on the V2 side of the circuit are sensors 175 and 176. Sensor 175 is a voltage monitor arranged for monitoring the voltage on the voltage rail V2. Sensor 176 is a temperature monitor provided on the MOSFET module board 142 to monitor temperature of the MOSFETs.

Between the nodes n1 and n2, such as close to and in series with the inductor, a current monitor 174 is provided to monitor the current passing through the inductor 160. The measurement signal from the current monitor is sent to the gate driving circuit. Indeed the measurement signals from all of sensors 171-176 are sent to the gate driving board 134.

Figure 5 also shows fibre link 27 connecting to the gate driving circuit for receiving signals from the controller unit 102 and sending measurement signals to the controller unit.

We now describe operation of the buck-boost converter. The MOSFETs are turned on in pairs. When the MOSFETs 152 and 155 are turned on, the voltage V1 is applied across the inductor 160 and energy is stored in the inductor. Current flows and increases following turn-on, with the current flowing through MOSFET 152, inductor 160 and MOSFET 155. During this time MOSFETs 153 and 154 are turned off. The switching of the pairs of MOSFETS are complementary such that when the MOSFETs 152 and 155 are then turned off, the MOSFETs 153 and 154 are turned on. When this occurs the stored energy in the inductor results in current flowing via MOSFETs 153 and 154. After switching on the MOSFETS 153 and 154 (and switching off MOSFETs 152 and 155) the current will slowly reduce. By this and other operation of the switches the buck-boost converter operates similar to a switched mode power supply and can be used to increase or decrease the voltage. In particular, operation is that of a buck-boost bi-directional converter and may operate in voltage, current or power control mode.

The converter arrangement of figure 5 can be used to output a voltage on the V2 rail that is higher or lower than that on the input voltage rail V1 (i.e. to step-up or step-dwon), and power can flow in either direction. Example voltages for V1 and V2 may be 1500V and 2100V, or 1500V and 700V. The multiple stages may be configured to handle from 100s of kW to 10 MW such as 600kW or 3MW peak powers.

In one embodiment the MOSFETS are SiC MOSFET modules and the MOSFET module boards were designed by the applicant.

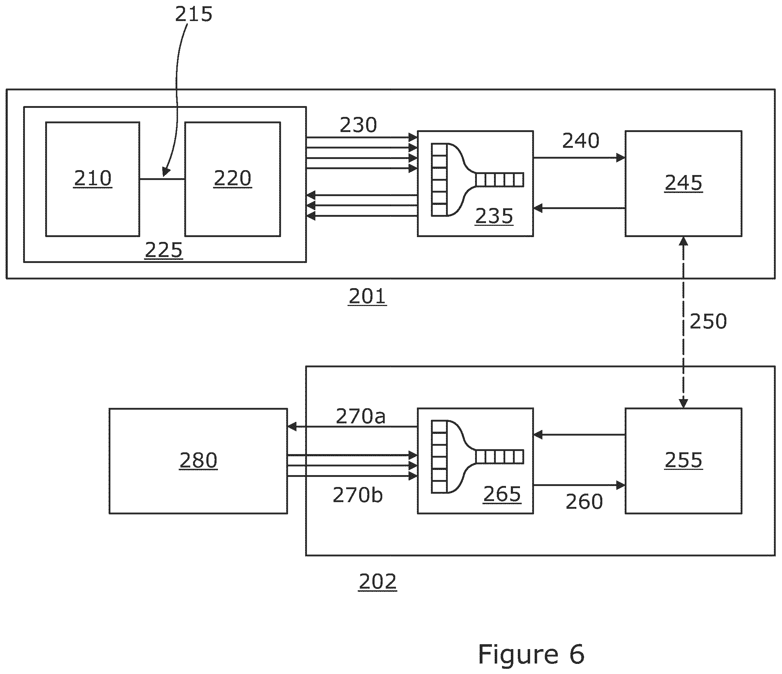

As described earlier, the invention uses serialisation and an optical fibre link to send control signals between a controller unit 102 and a gate driving unit 131 of a power stage. Figure 6 shows more detail of how the signals are sent and correspondingly how measurement signals are returned.

In figure 6 a system on chip 225 is provided which comprises a microprocessor 210 and an FPGA core 220 connected by an AXI interface 215. The microprocessor is programmed with a control algorithm which uses voltage and current measurement signals to determine operating settings. The microprocessor may also receive control signals (such as C shown in figure 4) from the main processor of the vehicle such as controlled by the driver. The FPGA core takes the operating setting determined by the microprocessor and generates/processes them to produce digital signals for controlling the power stages. In figure 4 the microprocessor and FPGA core are combined as FPGA 102. The FPGA core generates the signals as LVCMOS digital signals 230 which are sent to serialiser/deserialiser IC 235. The serialiser/deserialiser IC 235 is shown as one IC but may use separate chips or units for the serialiser and deserialiser, such as Analog Devices MAX 9205 serialiser and MAX 9206 deserialiser. This serialiser/deserialiser pair may run at a clock speed of the order of 10MHz such as between 16 and 40MHz. The serialiser takes a parallel stream of signals and converts them to a serial stream of signals. The serialisation may be of the SerDes form and may use 8b/10b SerDes encoding. Such encoding takes 8-bit streams and encodes them to form 10-bit symbols. 8b/10b encoding has advantages of achieving DC balance, bounded disparity and sufficient state changes to enable clock recovery. Other similar encoding may instead be used which achieves the same functionality, for example, encoding a number of bits as bit symbols. Once serialized the signals are sent as Low Voltage Differential digital signals (LVDS) 240 to the optical transceiver 245 . Serializer/deserialiser 235 of figure 6 corresponds to serialiser S1 and deserialiser DS1 of figure 4. The optical transceiver 245 corresponds to optical transceivers O1 and O4 in figure 4. The system on chip 225, serialiser/deserialiser 235 and optical transceiver 245 may all provided on control PCB 201 which is spaced apart or remote from the gate driving unit or PCB 202. Optical transceiver 245 transmits control signals along the optical fibre link 250 such as duplex plastic optical fibre, which are received by optical transceiver 255 on gate driving unit 202 which corresponds to gate driving unit 131 in figure 4. The optical transceiver 255 outputs LVDS signals 260 to serialiser/deserialiser 265 which is also on gate driving unit 202. The serialiser/deserialiser 265 outputs transistor controls signals 270a to control the gates of the transistors of the power stage. For example, transistor control signals may include two sets of controls signals, one for each of the two MOSFET modules 280. The return of measurement data from sensors is largely the reverse of the sending of control data. Serialiser/deserialiser 265 receives the measurement data which may include any of: voltage measurement signals, current measurement signals, temperature measurement signals from sensors such as sensors 171-176. Fault signals, such as generated by the MOSFET modules may also be received by the serialiser/deserialiser 265. The measurement data and fault signals are shown in figure 6 at 270b. The sending of measurement data includes serialising and providing to the optical transceiver 255 as LVDS signals. The optical signals are sent by the transceiver along optical fibre 250 to optical transceiver 245. Optical transceiver sends the measurement signals as LVDS signals to the serialiser/deserialiser 235 and the measurement data is provided to the system on chip as LVCMOS digital signals. The serialiser/deserialiser 265 and optical transceiver 255 are provided on gate driving unit, whereas the MOSFET modules 280 may be on a different board or circuit. MOSFET modules 280 correspond to MOSFET modules 141 and 142 of figure 4.

The feedback provided from the sensors to the control unit of FPGA is used to control the switching of the MOSFETs so as to control the PWM and power transfer. The measurement signals and control may be considered to be closed loop feedback and may use PI loop feedback.

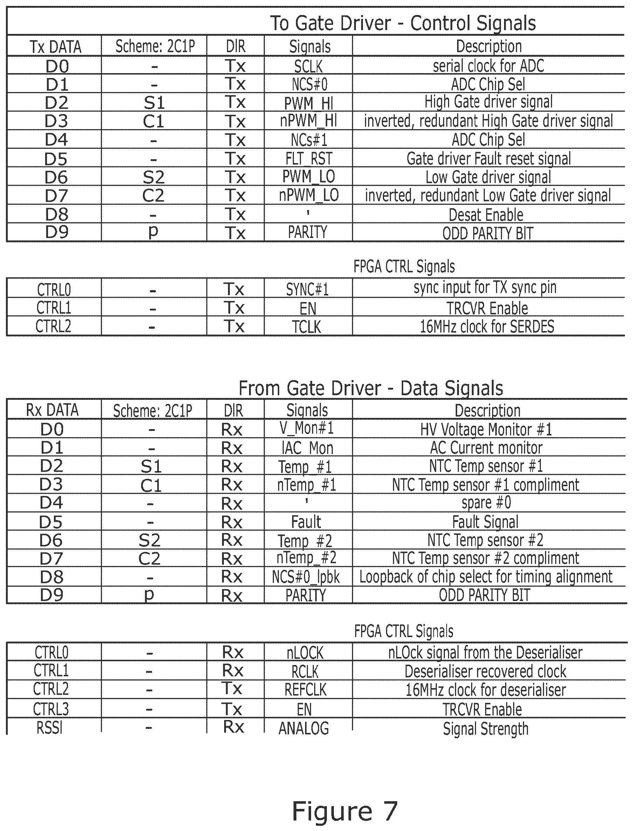

Figure 7 is a table providing more information on the signals and voltages that are input to, or output from, the serialiser/deserialiser 235 of figure 6. The top half of the table indicates inputs to the serialiser which are a combination of control signals for sending to the gate driving circuits and control signals for the serialiser itself. Starting with the last three items in the top half of the table, respectively indicated as CTRL0, CTRL1 and CTRL2 these provide a SYNC signal, an enable/disable signal for serial data output, and a clock signal, which all provided for operation of the serialiser. As discussed, the clock signal may be a clock signal running at 10-40 MHz such as at 16 or 19.2 MHz. Now turning to the top ten items listed in the table, these are data or control signals D0-D9 which are sent to the gate driving circuit by the serialiser. The data D0-D9 comprises data for controlling the two MOSFET modules 141 and 142 and also for running the sensors, M, on the gate driving board. Data D0 is a clock signal that is sent to the gate driving circuit for driving analogue to digital converters on the gate driving board. The ADCs measure voltage, current and temperature on the gate driving board. Data D1 and D4 are logic signals to start the ADC conversion for the measurement sensors. Data D2 and D6 are signals used for turning on the top and bottom MOSFETs in the bridge. D3 and D7 relate to inverted signals which are used to improve the DC balance of signals on the optical link and are used to check for errors in D2 and D6. D5 is a data signal for resetting the fault logic of the gate driver if a fault has been reported. D8 is an enable signal for an overcurrent detection system and D9 is an odd parity bit which is calculated by the transmitting controller. The bit is reproduced and checked on the gate driving circuit or board to detect single bit errors.

The lower half of the table indicates data that is received at the deserialiser from the gate driving circuits or gate driver board. As can be seen the various data D0-D9 are measurement data such as voltage, temperature and current measurements as discussed previously. For example, D0 is an ADC conversion result for a high voltage measurement, such as of the output voltage V2 in figure 5. D1 is an ADC conversion result for a current measurement such as that by current sensor 174 in figure 5. D2 is an ADC conversion result for a temperature measurement. D3 is an inverted signal used to improve the DC balance of signals on the optical link and check for errors in D2. D4 is unused. D5 is a fault logic signal which has multiple fault logic signals multiplexed into D5. D6 is another ADC converted temperature measurement. D7 is an inverted signal used to improve the DC balance of signals on the optical link and check for errors in D5. D8 is a loop back of TxData signal D1, which is used at the FPGA to align the timing of received ADC measurement conversion results. D9 is an odd parity bit which is calculated by the gate driver on the transmitted data. This bit is reproduced and checked on the FPGA to detect single bit errors. Again some control signals relating to the deserialiser itself are included at the foot of the table, such as relating to the clock recovered from the deserialiser.

Although we have described above a four MOSFET buck-boost type converter which provides bi-directional power conversion, an alternative converter may be provided that is unidirectional and has only two MOSFETs. Such a converter would be similar to the at shown in figure 5 but would not include MOSFETs 154 and 155. The output from the inductor would be connected directly to the output voltage line V2 across smoothing capacitor C4. This type of converter may be known as a buck type converter. The unidirectional nature of the two MOSFET converter means that power conversion is provided towards the second voltage rail V2. The use of the buck type converter also provides a reduction in voltage at V2 compared to V1.

Although specific embodiments of the invention have been described with reference to the drawings, the skilled person will be aware that variations and modifications may be applied to these embodiments without departing from the scope of the invention as defined in the claims.

Embodiments of the present invention are set out in the following clauses:
Clause A1. Apparatus comprising:
   a power converter unit comprising a plurality of electrically parallel power stages, each power stage arranged to convert electrical power in either direction between a first DC voltage and a second DC voltage,
   each power stage comprising one or more MOSFET modules, one or more gate driving units arranged to deliver gate driving signals to the MOSFETs in the MOSFET module(s) to effect the electrical power conversion by MOSFET switching, and a plurality of sensors arranged to measure physical parameters of the power stage;
   a control unit spaced from the power converter unit, the control unit arranged to receive one or more control signals dictating properties of the required electrical power conversion, and the measured physical parameters from the power stages, and to generate gate driving signals for use by the gate driving units in controlling the MOSFETs,
   each power stage being coupled to the control unit via a single respective uplink plastic optical fibre arranged to carry the measured physical parameters to the control unit for use in generating the gate driving signals, and a single respective downlink plastic optical fibre arranged to carry the gate driving signals from the control unit to the power stage for use in delivering gate driving signals to the MOSFET modules,
   each power stage comprising an uplink optical interface and a serialiser arranged to serialise the measured physical parameters for transmission to the control unit on the uplink plastic optical fibre via the uplink optical interface,
   the control unit comprising, for each power stage, a downlink optical interface and a serialiser arranged to serialise the gate driving signals for that power stage for transmission on the downlink optical fibre via the downlink optical interface.
Clause A2. The apparatus of clause A1, wherein each power stage further comprises a downlink optical interface and a deserialiser, the deserialiser arranged to deserialise the gate driving signals received from the downlink optical interface and supply the gate driving signals to the gate driving units to control the MOSFETs, and
   wherein the control unit further comprises an uplink optical interface and a deserialiser, the deserialiser arranged to deserialise the measured physical parameters received from the uplink optical interface for use in generating the gate driving signals.
Clause A3. The apparatus of clause A1 or clause A2, wherein each power stage comprises a separate serialiser IC to the other power stages.
Clause A4. The apparatus of any of clauses A1 to A3, wherein each power stage comprises a separate deserialiser IC to the other power stages.
Clause A5. The apparatus of any of clauses A1 to A4, wherein the serialisers are configured to use 8b/10b encoding.
Clause A6. The apparatus of any of clauses A1 to A5, wherein the gate driving signals comprise PWM control signals.
Clause A7. The apparatus of any of clauses A1 to A6, wherein the measured physical parameters comprise one or more of: voltage, current and temperature, measured at the respective power stage.
Clause A8. The apparatus of any of clauses A1 to A7, wherein each power stage has a single gate driving unit configured to receive the gate driving signals and deliver the gate driving signals to two MOSFET modules, a first of the two MOSFET modules arranged on a first side of a power converter bridge and second of the two MOSFET modules arranged on a second side of a power converter bridge.
Clause A9. The apparatus of clause A8, wherein the gate driving unit comprises a first gate driving circuit and a second gate driving circuit, the first gate driving circuit arranged to send gate driving signals to the first MOSFET module and the second gate driving circuit arranged to send gate driving signals to the second MOSFET module.
Clause A10. The apparatus of clause A8 or A9, wherein, for each power stage, the serialiser of the control unit is configured to serialise the gate driving signals for one or more MOSFETs in the first MOSFET module with the gate driving signals for one or more MOSFETs in the second MOSFET module and the downlink optical interface is configured to transmit the serialised gate driving signals on the downlink plastic optical fibre to the gate driving unit of the respective power stage.
Clause A11. The apparatus of any of clauses A8 to A10, further comprising, at each gate driving unit, a digital isolator arranged to provide isolation between the gate driving signals for the first MOSFET module and the second MOSFET module.
Clause A12. The apparatus of any of clauses A1 to A11, wherein the MOSFETs are arranged in a buck-boost configuration.
Clause A13. The apparatus of any of clauses A1 to A12, wherein the first MOSFET module comprises two MOSFETs and the second MOSFET module comprises two MOSFETs.
Clause A14. The apparatus of any of clauses A1 to A13, wherein the uplink plastic optical fibre and the downlink plastic optical fibre are configured as a duplex optical link such that the control unit communicates with the power stages by respective duplex optical links to each power stage.
Clause A15. The apparatus of any of clauses A1 to A14, wherein the electrically parallel power stages are configured for outputting a voltage in the range 0 to 2000V or 0 to 5000V such as between 0 and 2500V, or in the range 100 to 2000V or 100 to 5000V such as between 1500 and 2500V.
Clause A16. The apparatus of any of clauses A1 to A15, wherein the combined converted power output by the plurality of power stages is in the range of 10s of kW to 10 MW. Clause A17. The apparatus of any of clauses A1 to A16, wherein the plastic optical fibre to each power stage is up to 5 or 10 metres long.
Clause A18. The apparatus of any of clauses A1 to A17, wherein the data rates of the serialiser and deserialiser are between 10 and 40MHz.
Clause B19. A vehicle comprising the apparatus of any of clauses A1 to A18, one or more battery modules and an electrical motive drive unit, the apparatus providing power conversion in either direction between the one or more battery modules and the electrical motive drive unit.
Clause C20. A method of controlling a power converter comprising a plurality of power stages, the method comprising:
   receiving, at a control unit, one or more control signals dictating properties of required electrical power conversion and measured physical parameters from the plurality of power stages;
   based on the received one or more control signals and measured physical parameters, generating respective gate driving signals for use by gate driving units in controlling MOSFETs of the one or more power stages;
   serialising the gate driving signals for a respective power stage;
   transmitting, via a downlink optical interface, the serialised gate driving signals on a downlink optical fibre to an optical interface at the respective power stage;
   receiving the serialised gate driving signals a the power stage and deserialising the gate driving signals at a deserialiser for the respective power stage; and
   delivering the gate driving signals to MOSFETs of one or more MOSFET modules to effect the electrical power conversion by MOSFET switching.
Clause C21. The method of clauses C20, further comprising:
   measuring one or more physical parameters at the respective power stage;
   serialising the measured one or more physical parameters and transmitting them, via an uplink plastic optical fibre, to the control unit; and
   deserialising the measured one or more physical parameters at the control unit.

## Claims

1. Apparatus comprising:
a power converter unit comprising a plurality of electrically parallel power stages, each power stage arranged to convert electrical power in either direction between a first DC voltage and a second DC voltage,
each power stage comprising one or more MOSFET modules, one or more gate driving units arranged to deliver gate driving signals to the MOSFETs in the MOSFET module(s) to effect the electrical power conversion by MOSFET switching, and a plurality of sensors arranged to measure physical parameters of the power stage;
a control unit spaced from the power converter unit, the control unit arranged to receive one or more control signals dictating properties of the required electrical power conversion, and the measured physical parameters from the power stages, and to generate gate driving signals for use by the gate driving units in controlling the MOSFETs,
each power stage being coupled to the control unit via a single respective uplink plastic optical fibre arranged to carry the measured physical parameters to the control unit for use in generating the gate driving signals, and a single respective downlink plastic optical fibre arranged to carry the gate driving signals from the control unit to the power stage for use in delivering gate driving signals to the MOSFET modules,
each power stage comprising an uplink optical interface and a serialiser arranged to serialise the measured physical parameters for transmission to the control unit on the uplink plastic optical fibre via the uplink optical interface,
the control unit comprising, for each power stage, a downlink optical interface and a serialiser arranged to serialise the gate driving signals for that power stage for transmission on the downlink optical fibre via the downlink optical interface.

2. The apparatus of claim 1, wherein each power stage further comprises a downlink optical interface and a deserialiser, the deserialiser arranged to deserialise the gate driving signals received from the downlink optical interface and supply the gate driving signals to the gate driving units to control the MOSFETs, and
wherein the control unit further comprises an uplink optical interface and a deserialiser, the deserialiser arranged to deserialise the measured physical parameters received from the uplink optical interface for use in generating the gate driving signals.

3. The apparatus of claim 1 or claim 2, wherein each power stage comprises:
a separate serialiser IC to the other power stages; and/or
a separate deserialiser IC to the other power stages.

4. The apparatus of any preceding claim, wherein the serialisers are configured to use 8b/10b encoding.

5. The apparatus of any preceding claim, wherein the gate driving signals comprise PWM control signals.

6. The apparatus of any preceding claim, wherein the measured physical parameters comprise one or more of: voltage, current and temperature, measured at the respective power stage.

7. The apparatus of any preceding claim, wherein each power stage has a single gate driving unit configured to receive the gate driving signals and deliver the gate driving signals to two MOSFET modules, a first of the two MOSFET modules arranged on a first side of a power converter bridge and second of the two MOSFET modules arranged on a second side of a power converter bridge, and
optionally, the gate driving unit comprises a first gate driving circuit and a second gate driving circuit, the first gate driving circuit arranged to send gate driving signals to the first MOSFET module and the second gate driving circuit arranged to send gate driving signals to the second MOSFET module.

8. The apparatus of claim 7, wherein, for each power stage, the serialiser of the control unit is configured to serialise the gate driving signals for one or more MOSFETs in the first MOSFET module with the gate driving signals for one or more MOSFETs in the second MOSFET module and the downlink optical interface is configured to transmit the serialised gate driving signals on the downlink plastic optical fibre to the gate driving unit of the respective power stage.

9. The apparatus of claim 7 or claim 8, further comprising, at each gate driving unit, a digital isolator arranged to provide isolation between the gate driving signals for the first MOSFET module and the second MOSFET module.

10. The apparatus of any preceding claim, wherein:
the MOSFETs are arranged in a buck-boost configuration; and/or
the first MOSFET module comprises two MOSFETs and the second MOSFET module comprises two MOSFETs.

11. The apparatus of any preceding claim, wherein the uplink plastic optical fibre and the downlink plastic optical fibre are configured as a duplex optical link such that the control unit communicates with the power stages by respective duplex optical links to each power stage.

12. The apparatus of any preceding claim, wherein the electrically parallel power stages are configured for outputting a voltage in the range 0 to 2000V or 0 to 5000V such as between 0 and 2500V, or in the range 100 to 2000V or 100 to 5000V such as between 1500 and 2500V.

13. The apparatus of any preceding claim, wherein:
the combined converted power output by the plurality of power stages is in the range of 10s of kW to 10 MW; and/or
the plastic optical fibre to each power stage is up to 5 or 10 metres long; and/or
the data rates of the serialiser and deserialiser are between 10 and 40MHz.

14. A vehicle comprising the apparatus of any preceding claim, one or more battery modules and an electrical motive drive unit, the apparatus providing power conversion in either direction between the one or more battery modules and the electrical motive drive unit.

15. A method of controlling a power converter comprising a plurality of power stages, the method comprising:
receiving, at a control unit, one or more control signals dictating properties of required electrical power conversion and measured physical parameters from the plurality of power stages;
based on the received one or more control signals and measured physical parameters, generating respective gate driving signals for use by gate driving units in controlling MOSFETs of the one or more power stages;
serialising the gate driving signals for a respective power stage;
transmitting, via a downlink optical interface, the serialised gate driving signals on a downlink optical fibre to an optical interface at the respective power stage;
receiving the serialised gate driving signals a the power stage and deserialising the gate driving signals at a deserialiser for the respective power stage; and
delivering the gate driving signals to MOSFETs of one or more MOSFET modules to effect the electrical power conversion by MOSFET switching.
